# EUROPEAN PATENT SPECIFICATION

(11) **EP 0 647 071 B1**
(45) Date of publication and mention of the grant of the patent: **18.06.1997**
(21) Application number: 93830401.1
(22) Date of filing: 30.09.1993
(51) Int. Cl.: H04Q 1/14, H04M 3/28

(54) **Modular device for accessing electrical or optical signals flowing through a distribution frame**
Modulare Einrichtung für Zugriff auf elektrische oder optische Signalen die durch einen Verteiler fliessen
Dispositif modulaire pour accéder aux signaux électriques ou optiques traversants un répartiteur

(43) Date of publication of application: 05.04.1995
(73) Proprietor: PLLB ELETTRONICA S.p.a., 20099 Sesto San Giovanni (Milano) (IT)
(72) Inventor: Leali, Sergio, I-20030 Barlassina (Milano) (IT)
(74) Representative: Checcacci, Giorgio

(56) References cited:
- WO-A-91/02423
- US-A- 2 855 469
- US-A- 3 875 351
- US-A- 4 029 913
- US-A- 5 123 041

## Description

### Field of the invention

The present invention relates to a modular device for access to high frequency electrical signals transiting in a distribution frame for telephone exchanges.

More specifically the present invention relates to a modular device for access to electrical signals transiting in a distribution frame for power stations or telephone exchanges of the type comprising a plurality of basic modules associated with each other in such a manner as to provide plural configurations for switchover and/or rerouting of said electrical signals and each module having at least one input terminal connected to an output terminal for transit of said electrical signals.

The field of application of the invention concerns in particular but not exclusively access to and supervision of the connections to the channels in transit and the description given below is made for this field of application with the only purpose of simplifying the exposition thereof.

### Prior art

As known, in the specific field of application of the present invention operators of communications networks require:
- improvement of the quality of the services offered to users, and
- automation of the location of malfunctions in TLC networks and rationalisation of maintenance of communications systems to reduce management costs.

To satisfy these requirements it is necessary to accede to the signals transiting in the distribution frames AF through diagnostic devices which allow monitoring of transiting signals and, under failure conditions, sending of test signals for corrective maintenance of the connections.

Insertion in the network of a diagnostic device has however some drawbacks described below.

On one hand there would be a decrease in the overall reliability of the communications network since electronics is added in series with the signal. On the other hand there would be a considerable financial burden for wiring of the connections between the distribution frame and the diagnostic device.

A known prior art solution is disclosed in the internation application No. WO-A-91/02423 which relates to a cable pair tester for accessing transiting signals in a distribution frame of telephone systems/exchanges. Said device comprises a plurality of connectors inserted in the cable pairs.

Each connector comprises one portion which is removably connected to the cable pairs and another portion which consists of a cable for connecting the cable pairs to a cable pair tester. The first portion is a removable plug.

This prior art solution doesn't provide switching means between the input and output terminals of the distribution frame but teaches to interrupt the electrical continuity between each cable pair and the cable pair tester.

Another prior art solution is disclosed in the US patent No. 4,029,913 which relates to an access circuit selection portion which is positioned on a telephone line.

The structure and function of the test access module associated to the portion is extremely complex and doesn't include decoupling means.

The technical problem at the base of the present invention is that of finding a modular device for access to the flows transiting in the distribution frame which would have structural and functional characteristics such as to make easy installation even in existing situations while overcoming the limitations and shortcomings of present embodiments.

Another purpose of the present invention is to provide an extremely reliable device which would permit reduction of the wiring necessary for installation of any instrument or apparatus for analysis or diagnosis of the connections.

Another purpose of the present invention is to allow access by monitor or by sectioning to electrical or optical signals transiting in a generic distribution frame.

### Summary of the invention

The inventive idea at the base of the present invention is to equip each basic module with switch means which, when installed in a distribution frame and controlled through the pick-up interface and without the addition of electronics in series with the transiting signal, allow:
1) pick-up on a monitor of the transiting signal, and
2) access from one or both sides of the carrier.

On the basis of this inventive idea the technical problem is solved by a device of the type indicated above and defined by the characterising part of the annexed claims.

The characteristics and advantages of the device in accordance with the present invention are set forth in the description of an example of embodiment thereof given below by way of nonlimiting example with reference to the annexed drawings.

### Brief description of the drawings

In the drawings -
- FIG. 1 shows a diagram of a telephone exchange incorporating a device in accordance with the present invention,
- FIG. 2 shows a block diagram of a first embodiment of the device in accordance with the present invention,
- FIG. 3 shows another block diagram of a second embodiment of the device in accordance with the present invention,
- FIGS. 4, 6 and 7 show block diagrams in greater detail of some embodiments of the device of FIG. 2, and

FIG. 5 shows a diagram in greater detail of the device shown in FIG. 3.

### Detailed description

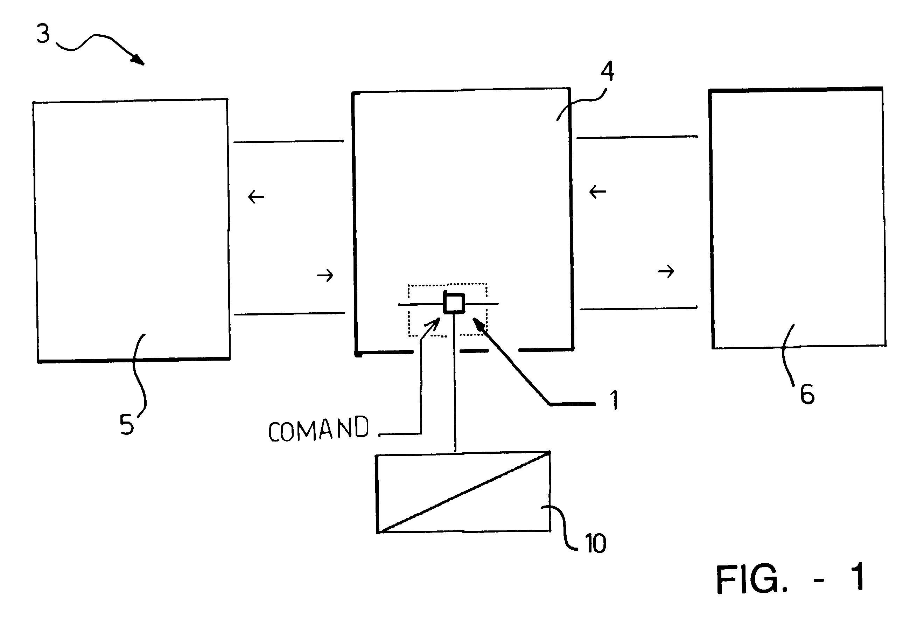

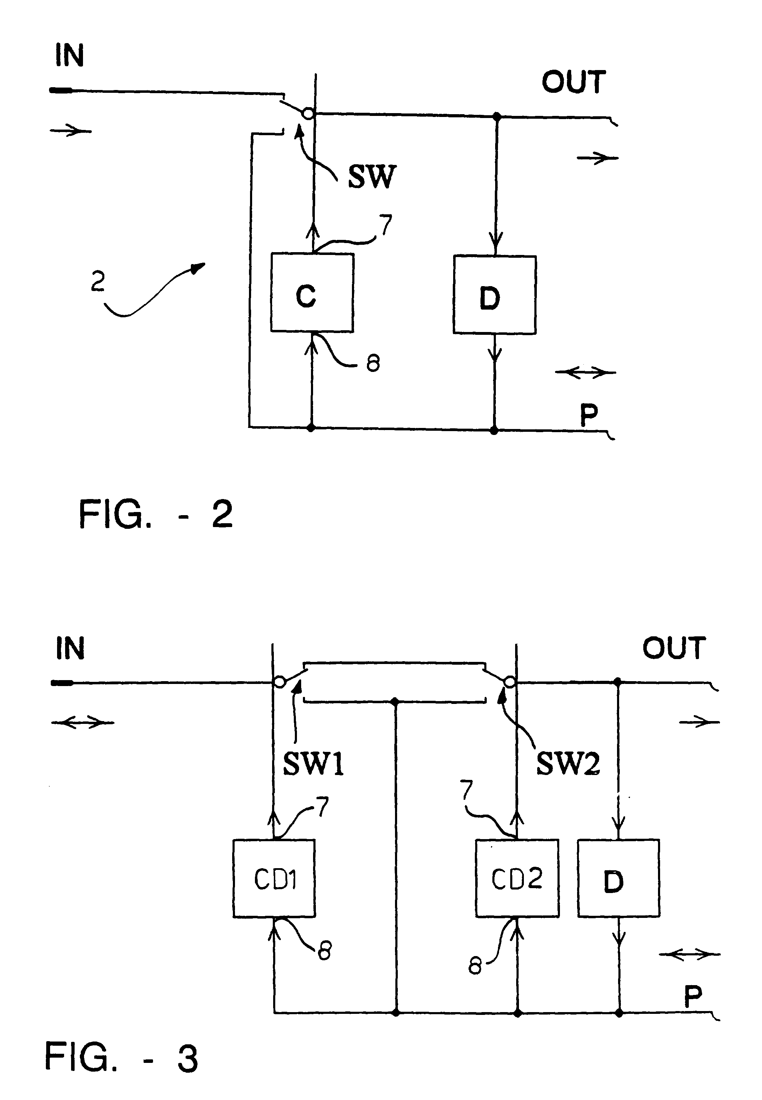

With particular reference to the examples of FIGS. 1 and 2, reference number 1 indicates entirely and diagramatically a modular device provided in accordance with the present invention for access by monitor or by sectioning to electrical signals in transit in a distribution frame of power stations or telephone exchanges 3.

The device in accordance with the present invention also lends itself to being associated with generic distribution frames for electrical or optical signals and the following description is given specifically for telephone exchanges with the only purpose of simplifying its exposition.

The device 1 is installed at a distribution frame 4 inserted in the telephone exchange 3 between exchange equipment 5 and line terminal apparatuses 6 of the telephone transmission network.

Since transit of the electric or optical signals is two-way, there is nothing against interpreting the following remarks by reversing the positions of the equipment 5 and apparatuses 6.

The distribution frame 4 houses a plurality of devices 1 each of which comprises in turn a plurality of basic electromechanical or electronic modules 2.

The device 1 appears externally as a container with a basically boxed structure in which are supported in a parallel manner the basic modules 2. Said structure is equipped with quick installation and connection means for fixing to the distribution frame 4 in replacement of and/or addition to station cable terminal supports.

Each basic module 2 of the device 1 has an input terminal IN for the electric signal carrier and an output terminal OUT. The IN and OUT terminals are normally connected together.

There is also an access terminal P to allow connection of the module 2 to a diagnostic device 10.

Basically the generic module 2 has at least three interfaces for each abutted flow and two of them, IN and OUT, are necessary for abutment of the transiting flow while the third P is for access by monitor or by sectioning to the transiting signal.

Advantageously in accordance with the present invention the basic module 2 comprises a decoupler D inserted between the output terminal OUT and the access terminal P. The decoupler D allows pick-up (without alteration) of the transiting electrical signal to make it available at the terminal P.

The module 2 also comprises a switch SW inserted in the connection between the input terminal IN and the output terminal OUT upstream of the decoupler D. The switch SW is the electronic or electromechanical type and normally closes the connection between the input terminal IN and output terminal OUT. In its second position the switch SW breaks said connection to connect the output terminal OUT to the access terminal P.

The switch SW is actuated by a command circuit C incorporated in the module 2 with an input 8 connected to the terminal P and an active output 7 on the switch SW.

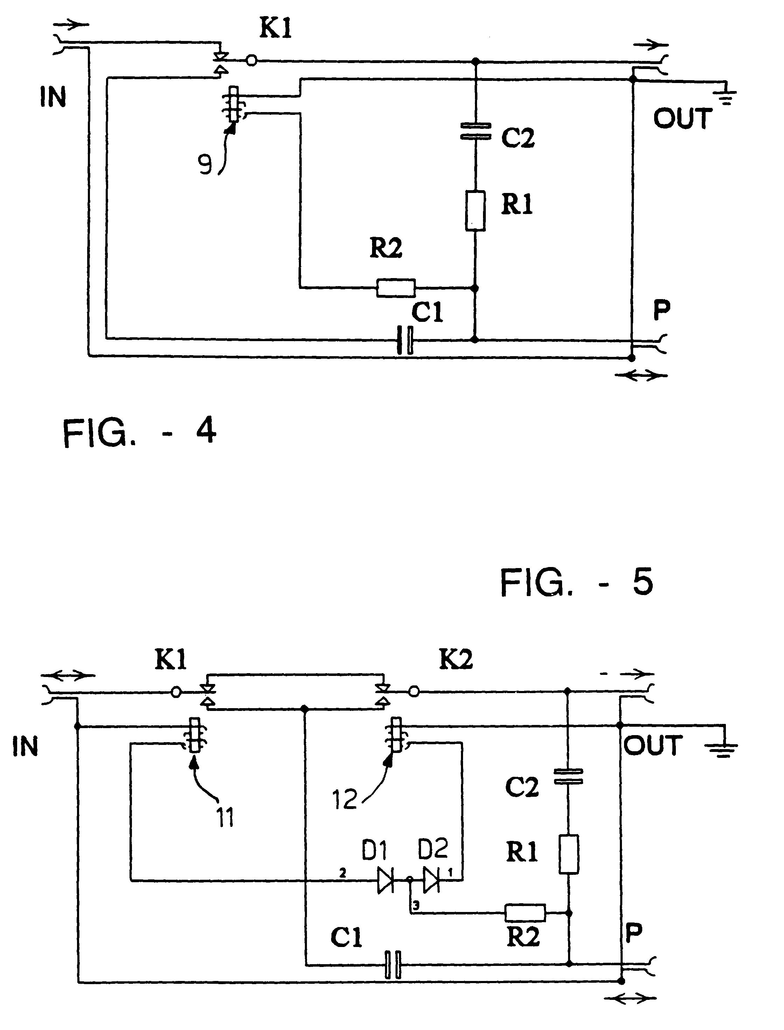

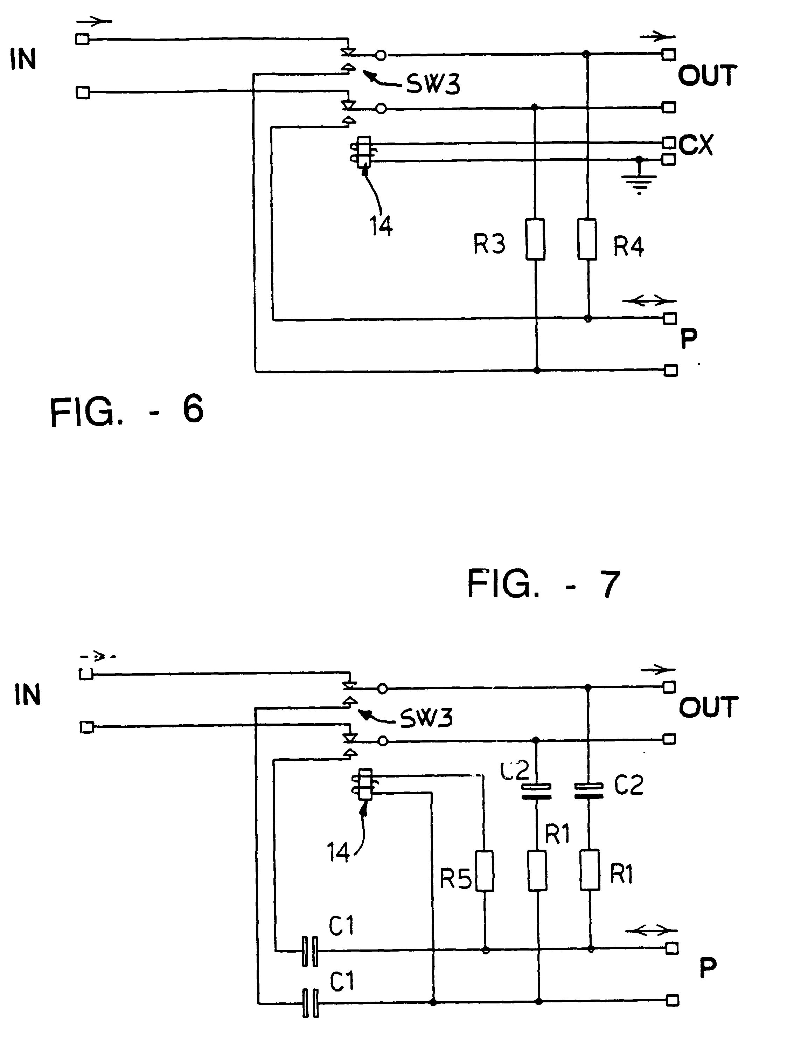

FIG. 4 shows in greater detail an example of an implementation of the block diagram of FIG. 2. This is of course only a nonlimiting example.

The decoupler D is provided by a simple serial circuit RC comprising a resistance R1 in series with a condenser C2. This circuit RC is connected between the output terminal OUT and the access terminal P.

A relay K1 is inserted between the input terminal IN and the output terminal OUT to fulfil essentially the functions of the switch SW. This relay K1 comprises an excitation coil 9 whose winding is connected on one side to a common electrical ground and on the other to the terminal P through a resistance R2.

The coil 9 and the resistance R2 constitute basically the command circuit C.

Finally, a condenser C1 connects the terminal P to a fixed contact of the relay K1.

Operation of the device in accordance with the present invention for pick-up of the signal on a monitor or for access by sectioning on only one side of the carrier is described below.

Reference is made to an initial state in which the switch SW/K1 is at rest and the signal entering the device through the terminal IN leaves it through the terminal OUT without being changed.

Through a signal sent by the diagnostic device 10 through the terminal P the command circuit C activates the switch SW/K1 in the other position and thus allows access through the terminal P to the carrier on the OUT side.

In greater detail and following the diagram of FIG. 4, with the relay K1 at rest the transiting signal enters the device through the terminal IN and leaves it normally through the terminal OUT. This signal is brought through the decoupling resistance R1 to the access terminal P and made available for monitor analysis.

Sending through the connector P a direct current sufficient to excite the relay K1 the signal present at the terminal P is connected dynamically to the output terminal OUT thus allowing access by sectioning through the terminal P to one side of the carrier. The resistance R2 separates the high frequency signal present on the connector P from the excitation coil 9.

Now with particular reference to the example of FIG. 3 there is described an embodiment variation of the device in accordance with the present invention for pick-up on a monitor of the transiting electrical signal and access by sectioning to both sides of the carrier.

In this variation, co-operating details and parts having the same structure and operation as the above embodiment are indicated by the same reference symbols.

FIG. 3 shows the block diagram for pick-up on a monitor and access by sectioning on both sides. In comparison with the above embodiment there are provided a first SW1 and a second switch SW2 which are structurally independent and inserted in series in the connection between the input terminal IN and output terminal OUT.

With each switch SW1, SW2 is associated a corresponding command circuit CD1 and CD2 having its input 8 connected to the terminal P and output 7 connected to pilot the related switch.

This circuit structure is shown in greater detail in the example of FIG. 5 in which there can be seen a pair of relays K1 and K2 inserted between the terminals IN and OUT. The decoupler D is again made up of the series of the resistance R1 and the condenser C2.

The first relay K1 has the related excitation coil 11 connected on one side to the electrical ground and on the other side to a diode D1 associated with the terminal P through the resistance R2. The diode D1 is polarised directly towards the coil 11.

The second relay K2 has the related coil 12 connected between ground and a second diode D2 associated in turn with the terminal P through the resistance R2. This second diode D2 is however polarised directly toward the resistance R2.

When at rest the switches SW1 and SW2 permit transit of the signal between the terminals IN and OUT. The decoupler D allows, as in the above example, pick-up of the transiting signal to make it available at the access terminal P.

Through an appropriate signal sent to the module 2 through the terminal P it is possible operate the switches SW1 or SW2 through the command circuits CD1 and CD2 and thus allow access to the carrier on the IN side or the OUT side.

Basically, the command necessary for choice of the type of access made, on a monitor or by sectioning, is always sent to the device through the access interface P. Said access interface P is also used to send the command for choice of the side to be accessed by sectioning, station side or user side.

Then sending another signal to the module 2, again through the terminal P, the second command circuit CD2 activates switching of the second switch SW2 to the other possible position, thus allowing access through P to the OUT side of the carrier.

The transiting signal entering the device through the terminal IN leaves it normally through the terminal OUT when the relays K1 and K2 are at rest. This signal is transmitted through the decoupling resistance R1 to the access terminal P and then made available for monitor analysis.

Sending through the access terminal P of a direct current sufficient to excite the second relay K2 allows connecting dynamically the signal present on the terminal P to the terminal OUT making possible access by sectioning through the terminal P on the OUT side.

The resistance R2 separates the high frequency signal present on the connector P from the excitation coil 12.

Sending a direct current such as to excite the relay K1, the signal present at the terminal P is connected dynamically to the connector IN allowing access by sectioning to the IN side.

The device in accordance with the present invention thus allows pick-up on a monitor and access by sectioning on both sides of the distribution frame 4.

The above remarks apply specifically to unbalanced circuits. The principles of the present invention also apply to balanced circuits.

With particular reference to FIG. 6 it is possible to examine another embodiment of a basic module 2 designed for monitor pick-up and access by sectioning on only one side of a balanced circuit.

For a balanced circuit there are provided dual input terminations IN, output terminations OUT and access terminations P with related two-wire connections between them.

A relay switch SW3 is inserted in the two-wire connection between the input terminal IN and output terminal OUT.

A coil 14 incorporated in the relay switch SW3 has its winding connected between two terminals CX the first of which is a signal input while the second is connected to ground.

A pair of resistances R3 and R4 allows monitor pick-up of the transiting signal through the access terminal P.

In another embodiment given with reference to FIG. 7 monitor access is provided through the circuits consisting of C2 and R1 which connect the transiting signal with the access terminal P.

Access by sectioning is provided by activating the coil 14 of the switch SW3 by means of a command entering from the terminal P and sending a test signal, again through the terminal P, to the switch SW3 through the condensers C1.

In the example of FIG. 6, through the terminal CX is sent a direct current sufficient to excite the coil 14 so that the signal present at the terminal P is transmitted to the terminal OUT allowing thereby access during isolation with direct coupling through the terminal P on only one side of the carrier.

In the example given in FIG. 7 the direct current necessary for activating the coil 14 is transmitted directly through the access terminal P.

The device in accordance with the present invention in its various embodiments solves the technical problems and provides numerous advantages the first of which lies surely in the fact that it allows monitor and isolation access to the flows transiting in the distribution frame.

This allows not only making diagnostic pick-ups of the high frequency electrical signals but also automatic intervention for preventive and/or corrective maintenance of the connections.

The device in accordance with the present invention achieves the set purpose in a simple and effective manner. In addition, the device is easy to install even in existing situations, is extremely reliable and permits reduction of the wiring necessary for installation of any diagnostic device for analysis and/or diagnosis of the connections.

Naturally modifications and variations can be made to the device which is the object of the present invention without thereby going beyond the scope thereof as defined in the following claims.

## Claims

1. A modular device (1) for access to electrical signals transiting in a distribution frame (4) of power stations or telephone exchanges (3) of the type comprising a plurality of basic modules (2) associated with each other in such a manner as to provide plural configurations for exchange and/or rerouting of said electrical signals and each module having at least one input terminal (IN) connected to an output terminal (OUT) for transit of the electrical signals and
an additional access terminal (P) connected to a diagnosis device (10), characterised in that it further includes:
- switching means (SW) inserted on the connection between the input and output terminals (IN, OUT) and comprising at least one switch (SW1) having a first position in which it is normally closed on said connection between the input and output terminals (IN,OUT) and a second position in which it breaks said connection to connect together the output terminal (OUT) and the access terminal (P), and
- a command circuit (C) for the switching means (SW) actuated by an electrical signal applied to the access terminal (P),
- a decoupler (D) inserted between the output terminal (OUT) and the access terminal (P).

2. Device in accordance with claim 1 characterised in that said decoupler (D) is a series circuit RC.

3. Device in accordance with claim 1 in which the coupling between the terminals (IN,OUT,P) is the balanced type with dual input, output and access terminations and characterised in that it comprises a dual switch (SW3) inserted in the two-wire connection between the input terminal (IN) and output terminal (OUT) and actuated by a command signal applied to the access terminal (P) or an additional command terminal (CX).

4. Device in accordance with claim 1, characterised in that said switching means (SW) are actuated by an optical signal applied to the access terminal (P) or to an additional command terminal (CX).

5. Device in accordance with claim 1 characterised in that said switching means (SW) comprise at least one switching relay (K1).

6. Device in accordance with claim 5 characterised in that said switching relay (K1) has a first position in which it is normally closed in the connection between the input and output terminals (IN,OUT) and a second position in which it breaks said connection to connect together the output terminal (OUT) and the access terminal (P).

7. Device in accordance with claim 1 characterised in that said switching means comprise a first switch (SW1) and a second switch (SW2) which are structurally independent and inserted in series in the connection between the input and output terminals (IN,OUT).

8. Device in accordance with claim 7 characterised in that each switch (SW1,SW2) is piloted by a respective command circuit (CD1,CD2) actuated by an electrical signal applied to the access terminal (P).

9. Device in accordance with claim 5, characterised in that said relay has the winding of the related excitation coil (9) connected between a ground and the access terminal (P) through a decoupler (R2) and that said command circuit (C) comprises essentially said relay (K1) and said decoupler (D).

10. Device in accordance with claim 7 characterised in that the first switch (SW1) and the second switch (SW2) are two relays (K1,K2) the first (K1) of which has the related excitation coil (11) connected on one side to ground and on the other side to a diode (D1) associated with the access terminal (P) through a resistance (R2) while the second relay (K2) has the related coil (12) connected between ground and a second diode (D2) associated in turn with the terminal (P) through said resistance (R2).

## Patentansprüche

1. Modulare Einrichtung (1) zum Zugriff auf elektrische Signale, die in einem Verteilungsrahmen (4) von Kraftwerken oder Telefonvermittlungsstellen (3) des Typs übergehen, der eine Vielzahl von Basismodulen (2) umfaßt, die einander in solcher Weise zugeordnet sind, daß sie mehrere Konfigurationen für eine Vermittlung und/oder erneute Verzweigung der elektrischen Signale bereitstellen, wobei jedes Modul wenigstens einen Einganganschluß (EIN) aufweist, der mit einem Ausgangsanschluß (AUS) für ein Übergehen der elektrischen Signale verbunden ist; und
einen zusätzlichen Zugriffsanschluß (P), der mit einer Diagnoseeinrichtung (10) verbunden ist, dadurch gekennzeichnet, daß sie ferner umfaßt:
- eine Schalteinrichtung (SW), die auf der Verbindung zwischen den Eingangs- und Ausgangsanschlüssen (EIN, AUS) eingefügt ist und wenigstens einen Schalter (SW1) umfaßt, der eine erste Position, in der er normalerweise auf der Verbindung zwischen den Eingangs- und Ausgangsanschlüssen (EIN, AUS) geschlossen ist, und eine zweite Position, in der er die Verbindung unterbricht, um den Ausgangsanschluß (AUS) und den Zugriffsanschluß (P) zu verbinden, aufweist; und
- eine Befehlsschaltung (C) für die Schalteinrichtung (SW), die durch ein elektrisches Signal betätigt wird, welches an den Zugriffsanschluß (P) angelegt ist;
- einen Entkoppler (D), der zwischen den Ausgangsanaschluß (AUS) und den Zugriffsanschluß (P) eingefügt ist.

2. Einrichtung nach Anspruch 1, dadurch gekennzeichnet, daß der Entkoppler (D) eine Reihenschaltung RC ist.

3. Einrichtung nach Anspruch 1, bei der die Kopplung zwischen den Anschlüssen (EIN, AUS, P) der ausgeglichene Typ mit dualen Eingangs-, Ausgangs- und Zugriffsanschlüssen ist und die dadurch gekennzeichnet ist, daß sie einen dualen Schalter (SW3) umfaßt, der in die Zweidrahtverbindung zwischen den Eingangsanschluß (EIN) und den Ausgangsanschluß (AUS) eingefügt ist und von einem an den Zugriffsanschluß (P) oder einem zusätzlichen Befehlsanschluß (CX) angelegten Befehlssignal betätigt wird.

4. Einrichtung nach Anspruch 1, dadurch gekennzeichnet, daß die Schalteinrichtung (SW) durch ein optisches Signal betätigt wird, welches an den Zugriffsanschluß (P) oder an einen zusätzlichen Befehlsanschluß (CX) angelegt wird.

5. Einrichtung nach Anspruch 1, dadurch gekennzeichnet, daß die Schalteinrichtung (SW) wenigstens ein Schaltrelais (K1) umfaßt.

6. Einrichtung nach Anspruch 5, dadurch gekennzeichnet, daß das Schaltrelais (K1) eine erste Position aufweist, in der es normalerweise in der Verbindung zwischen den Eingangs- und Ausgangsanschlüssen (EIN, AUS) geschlossen ist, und eine zweite Position, in der es die Verbindung unterbricht, um den Ausgangsanschluß (AUS) und den Zugriffsanschluß (P) zu verbinden.

7. Einrichtung nach Anspruch 1, dadurch gekennzeichnet, daß die Schalteinrichtung einen ersten Schalter (SW1) und einen zweiten Schalter (SW2) umfaßt, die strukturell unabhängig und seriell in die Verbindung zwischen den Eingangs- und Ausgangsanschlüsen (EIN, AUS) eingefügt sind.

8. Einrichtung nach Anspruch 7, dadurch gekennzeichnet, daß jeder Schalter (SW1, SW2) von einer jeweiligen Befehlsschaltung (CD1, CD2) gesteuert wird, die von einem elektrischen Signal betätigt wird, das an den Zugriffsanschluß (P) angelegt ist.

9. Einrichtung nach Anspruch 5, dadurch gekennzeichnet, daß bei dem Relais die Wicklung der zugehörigen Anregungsspule (9) zwischen eine Masse und den Zugriffsanschluß (P) durch einen Entkoppler (R2) geschaltet ist, und daß die Befehlsschaltung (C) im wesentlichen das Relais (K1) und den Entkoppler (D) umfaßt.

10. Einrichtung nach Anspruch 7, dadurch gekennzeichnet, daß der erste Schalter (SW1) und der zweite Schalter (SW2) zwei Relais (K1, K2) sind, wobei bei dem ersten (K1) davon die zugehörige Anregungsspule (11) auf einer Seite mit Masse und auf der anderen Seite mit einer Diode (D1), die dem Zugriffsanschluß (P) durch einen Widerstand (R2) zugeordnet ist, verbunden ist, während bei dem zweiten Relais (K2) die zugehörige Spule (12) zwischen Masse und eine zweite Diode (D2), die wiederum dem Anschluß (P) durch den Widerstand (R2) zugeordnet ist, geschaltet ist.

## Revendications

1. Dispositif modulaire (1) pour accéder aux signaux électriques traversant un répartiteur (4) de centrales d'énergie ou de centraux téléphonique (3) du type comprenant une pluralité de modules de base (2) associés entre eux de manière à établir plusieurs configurations du central et/ou de réacheminement desdits signaux électriques, et chaque module comprenant au moins une borne d'entrée (IN) connectée à une borne de sortie (OUT) pour le passage des signaux électriques, et
une borne d'accès supplémentaire (P) connectée à un dispositif de diagnostic (10) caractérisé en ce qu'il comprend en outre :
- des moyens de commutation (SW) placés sur la connexion entre les bornes d'entrée et de sortie (IN, OUT), et comprenant au moins un commutateur (SW1) ayant une première position dans laquelle il est normalement fermé sur ladite connexion entre les bornes d'entrée et de sortie (IN, OUT), et une seconde position dans laquelle il interrompt ladite connexion pour connecter ensemble la borne de sortie (OUT) et la borne d'accès (P), et
- un circuit de commande (C) du moyen de commutation (SW) déclenché par un signal électrique appliqué sur la borne d'accès (P),
- un découpleur (D) introduit entre la borne de sortie (OUT) et la borne d'accès (P).

2. Dispositif selon la revendication 1, caractérisé en ce que ledit découpleur (D) est un circuit série RC.

3. Dispositif selon la revendication 1, dans lequel le couplage entre les bornes (IN,OUT,P) est du type symétrique avec deux bornes d'entrée, deux bornes de sortie et deux bornes d'accès, et caractérisé en ce qu'il comprend un double commutateur (SW3) introduit dans la connexion à deux fils entre la borne d'entrée (IN) et la borne de sortie (OUT) et déclenché par un signal de commande appliqué sur la borne d'accès (P) ou sur une borne de commande supplémentaire (CX).

4. Dispositif selon la revendication 1, caractérisé en ce que lesdits moyens de computation (SW) sont déclenchés par un signal optique appliqué à la borne d'accès (P) ou à une borne de commande supplémentaire (CX).

5. Dispositif selon la revendication 1, caractérisé en ce que lesdits moyens de commutation (SW) comprennent au moins un relais de commutation (K1).

6. Dispositif selon la revendication 5, caractérisé en ce que ledit relais de commutation (K1) a une première position dans laquelle il est normalement fermé dans la connexion entre les bornes d'entrée et de sortie (IN,OUT), et une seconde position dans laquelle il interrompt ladite connexion pour connecter ensemble la borne de sortie (OUT) et la borne d'accès (P).

7. Dispositif selon la revendication 1, caractérisé en ce que lesdits moyens de commutation comprennent un premier commutateur (SW1) et un second commutateur (SW2) qui ont des structures indépendantes et qui sont montés en série dans la connexion entre les bornes d'entrée et de sortie (IN,OUT).

8. Dispositif selon la revendication 7, caractérisé en ce que chaque commutateur (SW1,SW2) est piloté par un circuit de commande correspondant (CD1,CD2) déclenché par un signal électrique appliqué sur la borne d'accès (P).

9. Dispositif selon la revendication 5, caractérisé en ce que l'enroulement de la bobine d'excitation (9) associée audit relais est connecté entre une masse et la borne d'accès (P) par l'intermédiaire d'un découpleur (R2), et en ce que ledit circuit de commande (C) comprend essentiellement ledit relais (K1) et ledit découpleur (D).

10. Dispositif selon la revendication 7, caractérisé en ce que le premier commutateur (SW1) et le second commutateur (SW2) sont deux relais (K1,K2) dont le premier (K1) a sa bobine d'excitation correspondante (11) connectée d'un côté à la masse et de l'autre côté à une diode (D1) associée à la borne d'accès (P) à travers une résistance (R2), tandis que le second relais (K2) a sa bobine correspondante (12) connectée entre la masse et une seconde diode (D2) associée à son tour à la borne (P) à travers ladite résistance (R2).
